# NEW EUROPEAN PATENT SPECIFICATION

(11) **EP 0 605 717 B2**
(45) Date of publication and mention of the opposition decision: **17.12.2008**
(45) Mention of the grant of the patent: 06.10.1999
(21) Application number: 93918513.8
(22) Date of filing: 29.07.1993
(51) Int. Cl.: H04N 1/00, H04N 1/32

(54) **AUTOMATICALLY INITIATED SCANNING SYSTEM**
AUTOMATISCH STARTENDES ABTASTSYSTEM
SYSTEME DE BALAYAGE A DEMARRAGE AUTOMATIQUE

(30) Priority: 29.07.1992 US 922169; 09.12.1992 US 988404
(43) Date of publication of application: 13.07.1994
(73) Proprietor: Soque Holdings, Ltd., Pleasanton CA 94588 (US)
(72) Inventor: COTTE, Pierre, F-Paris 75015 (FR); FISH, Ronald, Craig, Morgan Hill, CA 95037 (US)
(74) Representative: Zeitler - Volpert - Kandlbinder
(86) International application number: PCT/US1993/007164
(87) International publication number: WO 1994/003994

(56) References cited:
- EP-A- 0 159 158
- EP-A- 0 358 441
- EP-A- 0 398 185
- EP-A- 0 426 412
- EP-A- 0 465 011
- EP-A- 0 478 340
- EP-A- 0 556 067
- WO-A-91/10969
- WO-A-92/07440
- PATENT ABSTRACTS OF JAPAN vol. 15, no. 130 (E-1051)29 March 1991 & JP,A,03 013 052 (TOKYO ELECTRIC CO., LTD.) 22 January 1991
- PATENT ABSTRACTS OF JAPAN vol. 6, no. 226 (E-141)11 November 1982 & JP,A,57 129 578 (RICOH K.K.) 11 August 1982

## Description

### Technical Field

The present invention relates to a scanning system. More particularly the invention relates to an automatically initiated optical scanning system in which the presence of an optical record medium initiates scanning. According to aspects of the invention, with little or no intervention by the user, one or more processes and/or software are invoked and the scanned optical information is provided to the process or software as a result of the automatic scanning initiation. While the invention has many applications, the scanning system may be used, for example, in the environment of a personal computing system having various capabilities, which may include printing, the transmission of facsimile ("FAX") and electronic mail ("E-mail") messages, and the storage of scanned optical information.

### Background Art

The widespread use of personal computers has greatly improved office worker productivity. However, many aspects of personal computing systems are not "user-friendly," thus discouraging new users and preventing many existing users from fully using system capabilities. Substantial time, skill and patience is needed to learn how to operate computers, understand the commands needed to manipulate their operating systems, and manipulate data using the multitude of software and user interfaces. Photocopy machines, FAX machines, scanners and E-mail have not been fully integrated into the personal computing environment. Moreover, although networks and modems permit sending and receiving electronic files, there is still no easy, fast and efficient way to send and receive data that is in the form of hard copy, i.e., text and images on paper. In a typical prior art arrangement the scanner driver must be manually invoked, the document scanned and then other software manually invoked to do something with the scanned image data.

Accordingly, a need has arisen for a scanning system directed to solving these problems.

The document Patent Abstracts of Japan on JP-A-3013052 discloses a facsimile equipment capable of establishing either a facsimile communication link or a telephone communication link. The equipment comprises a sensor for detecting whether or not a document to be faxed has been inserted into the equipment. When a user presses either a short dial key or a quick dial key it is checked, based on the sensor's output signal, whether a document has been inserted. If so, the facsimile number corresponding to the pressed key is read from memory, while otherwise a phone number is read so as to initiate a facsimile transmission or place a phone call.

The document EP-A-0 398 185 discloses an electronic filing apparatus for filing documents using a mark sheet. The apparatus comprises a CPU, a keyboard, a CRT control circuit, a CRT, a memory, a companding circuit, a facsimile transmit/receive circuit, a modem, a scanner with an automatic paper feed device, a storage device, a printer and an interface circuit connecting the scanner, the storage device and the printer to a system bus. In this prior art, scanning by the scanner starts after an instruction has been input through a key operation of the keyboard. Thus, this prior art discloses a "command-driven system".

The document EP-A-0 426 412 discloses an electronic apparatus combining a computer and a facsimile device. This document, like those described above, does neither disclose nor suggest a system in which the placement of a document alone is sufficient to initiate the document being drawn and scanned and the image of the scanned document being displayed.

EP-A-0 556 067 (prior art according to Art. 54(3) EPC) discloses an integrated keyboard and scanner having a 'master mode' in which the user starts the scanning process by inserting a document into the scanner feeding slot. The scanner automatically starts scanning, initiates a communications protocol with the host computer and the host receives the scanned data into a 'spool' directory where it is stored for an application to retrieve it. . EP-A-0 556 067 does not disclose means for automatically displaying the image of the scanned document.

### Disclosure of Invention

The problems explained above are solved with a system as claimed in claim 1. Preferred embodiments of the invention are subject-matter of the dependent claims.

According to the present invention, the basic elements of a scanning system include detector means for detecting the presence of an optical record medium, scanning means for generating a representation of optical information carried by the record medium, means for drawing the optical record medium past the scanning means so that the scanning means generates the representation in response to the detector detecting the presence of the medium, and means for displaying the representation. The means for displaying comprises a display device and resident software causing the display of the representation to be performed automatically and immediately.

Preferably, the optical record medium is in the form of flat sheets, such as sheets of paper. However, the invention in its broadest scope is not limited to use with paper and flat sheets. Aspects of the invention are applicable to use with optical record media formed from material other than paper (synthetic film, for example) and formed in shapes other than sheets.

Scanning and displaying of the scanned optical information is automatically initiated in the sense that no user action is required other than commencing physical association between the optical record medium and the detector means to cause the detector means to detect the presence of the medium. In one embodiment, a housing contains the detector means and scanning means, and is adapted to accept the insertion of a record medium such that the detector means senses the insertion of the record medium. Preferably, the housing also includes means for automatically drawing the record medium into the housing for scanning when the record medium is inserted and for automatically feeding the record medium out of the housing.

A further aspect of the invention is that the automatic scanning, in addition to triggering the automatic display of the scanned optical information, triggers further automatic action, which may include (1) the automatic transmission of the scanned optical information to a process or software to, for example, a printer, an E-mail message system, a FAX message modem, or storage, or (2) the automatic presentation to a user of action choices by way of a "pop-up" menu, for example, on a visual display. The automatic and immediate display of the scanned optical information provides real time visual feedback to the user.

What is to be done with the scanned optical information, in addition to being displayed, is determined by commands. Commands may be generated in one or more ways: (1) they may be predetermined and not user selectable; (2) they may be determined by the user prior to the initiation of scanning; (3) they may be recognized from symbols carried by the record media being scanned; and (4) they may be input or selected by the user subsequent to scanning. An embodiment of the system may employ more than one of these ways of generating commands.

Cases (1), (2) and (3) are automatic in the sense that automatically initiated scanning causes further action without further intervention by the user. Case (4) is also automatic in the sense that option choices are presented to the user without prior intervention by the user.

In case (1), the scanning system may be configured as a device dedicated to a single purpose - for example, a scanner for transmitting FAXes. In this case, the automatic scanning of the record medium also initiates the commands necessary for the system to invoke a FAX transmission. The system may be embodied in a stand-alone FAX device or it could be a peripheral to a related device such as a host computer having FAX transmission capabilities.

In case (2), the user may exercise a choice prior to the initiation of scanning. The choice may be only a single choice or it may be multiple choices. For example, there may be an actuator means, such as a button, which if pushed by the user prior to initiating scanning, generates the commands required to cause the scanned information, for example, to be printed by a peripheral printer. If the button is not pushed prior to initiating scanning, the system may operate in accordance with case (3) or case (4). The button may be dedicated to a single, predetermined purpose or it may be user programmable. Alternatively, the actuator means may permit the selection from multiple choices.

In case (3), commands may be affixed to the record medium prior to the initiation of scanning. Recognition means recognizes one or more symbols in the representation of optical information, each symbol representing one or more commands. Thus, if a user wants to fax a document, the user affixes a symbol, such as the word "FAX" to the sheet. The symbol may be preprinted or added by the user by way of a sticker or writing. Auxiliary symbols may be associated with the command symbols. For example, auxiliary symbols may be a telephone number to which a FAX is to be transmitted. The recognition means may be a part of the scanning means or, alternatively, may be part of processing means either physically housed with the scanning means and detector means or physically located apart from them, such as in a host computer.

In case (4), commands may be input or selected by the user subsequent to scanning. In one embodiment, for example, the initiation of scanning causes a pop-up window to appear on a monitor peripheral to a host computer to which the scanning means and detector means are also coupled. The pop-up window presents a menu with choices as to how the scanned optical information is to be used. The user selection results in the inputting of the commands required to invoke and execute the process or software representing that choice. However, case (4) need not require the use of a host computer and conventional monitor. One alternative, for example, is a stand-alone device having a built-in visual display, such as a flat panel display screen. The stand-alone device may have the capability, for example, to transmit E-mail and/or FAXes and/or to print and/or to store in response to the initiation of scanning and the selection by the user of a desired action listed on the flat panel display screen.

Output means with one or more output paths may also be associated with the detector means and scanning means. The output means may be responsive to one or more commands in order to selectively apply output signals to one or more of the paths. For example, in the case of a stand-alone embodiment as just described, multiple paths may couple the output means respectively to devices in which E-mail, FAX. printer and storage processes and software are resident.

In its fullest aspects, the end result of the scanning system according to the present invention is that one or more processes and/or software are invoked and the scanned optical information is provided to the process or software. This is accomplished essentially automatically, in the sense explained above, with little or no intervention by the user.

Certain aspects of the invention make it well suited for use with a personal computer. In one embodiment of the invention, the detector means, scanning means and output means are housed together and function as a computer peripheral. In this context, the invention may be viewed as a new kind of computer input device, providing another way of inputting commands and data to a computer and, thus, supplementing traditional computer input devices (i.e., keyboard, mouse, etc.). This new way of inputting command and data may be characterized as "paper based computing."

In order to simplify connecting to a host computer, communication may be via the computer's serial port. In the event that the computer may not have an unused serial port, the scanning system may also provide for the sharing of an existing serial port. In order to overcome the bandwidth limitations inherent in serial data transmission, the scanning means may include means for data compression. Suitable data decompression may be provided in a host computer. However, data communication with a host computer is not limited to serial data protocol.

### Brief Description of Drawings

Figure 1 is a symbolic diagram of an embodiment scanning system according to the present the invention.

Figure 2 is partially exploded perspective view of an alternative scanning input device in combination with a computer monitor.

Figure 3 is a drawing of a pop-up window with menu options displayed therein.

Figure 4 is a flow chart representing processing by the input device for one embodiment according to the teachings of the invention.

Figure 5 is a drawing of an input document having command symbols and auxiliary symbols.

Figure 6 is a flow chart representing processing by the input device software resident on the host for the preferred embodiment according to the teachings of the invention.

Figure 7 is a flow chart of a process carried out by an embodiment of the input device for converting gray scale pixel data to black and white data compressing the data and transmitting it to the host for decompression and use or storage.

Figure 8 is a flow chart of the process of compressing gray scale scanned data and transmitting it over a high speed link to the host.

Figure 9 is a flow chart of the process of scanning gray scale data and transmitting it directly without compression from the input device to the host computer over a high speed, high bandwidth link.

Figure 10 is a block diagram of the electronic circuitry in the scanning input device.

### Modes for Carrying Out the Invention

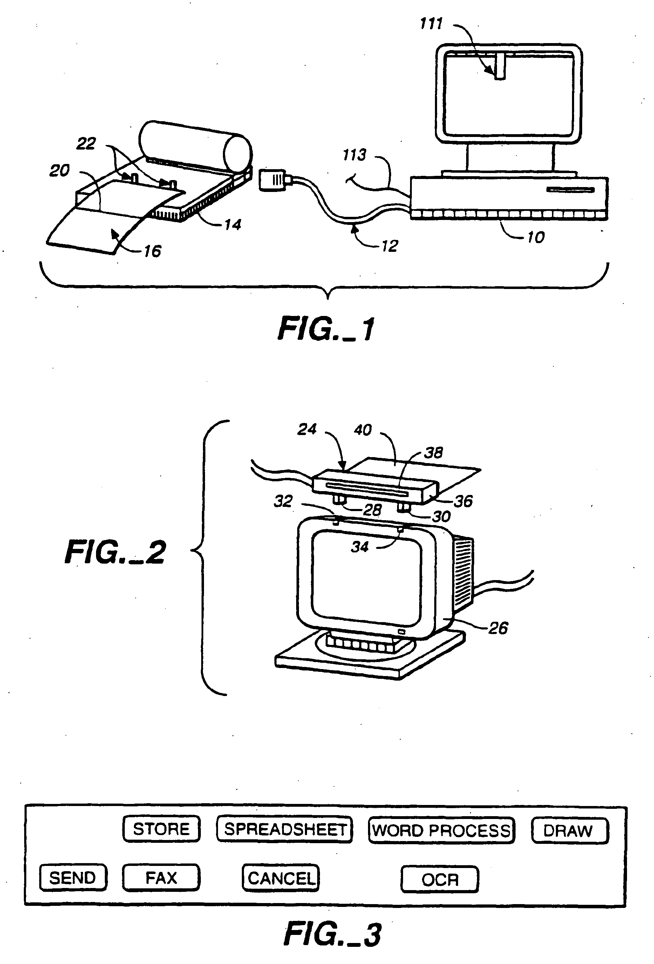

Referring to Figure 1, an embodiment of the scanning system according to the present invention is shown. Although in this embodiment, the invention is in the environment of a personal computer system, the invention is not limited to such an environment. A host computer 10 is coupled via a data transfer means such as a data cable 12 to a scanning input device 14. For clarity in presentation, the input device 14 of Figure 1 does not show all of the elements required in a practical scanning device. However, such devices and elements thereof are well known in the art.

The data transfer means in the embodiment of Figure 1 and other embodiments may use any form of transmission of data to the host including transmission by (1) a data cable using any format and protocol (including parallel data transfer), (2) a local or wide area network, (3) a telephone link (including, for example, ISDN, fiber optic links, etc.), (4) electromagnetic radiation (including, for example, satellite communications, packet radio, cellular radio, etc.), (5) infrared, or (6) other suitable means. In certain embodiments, the data transfer means may be implemented by a serial data cable using RS232 serial data protocol in order to simplify the use with a host computer of a scanning input device embodying aspects of the invention. By using a host computer's RS232 serial data transfer capabilities it is not necessary to add additional hardware to the host computer as by adding an auxiliary board or card. However, the invention is not limited to using the RS232 serial data transfer format and protocol.

Input device 14 has a housing containing scanning means (not shown) which uses known scanner technology to generate a representation of the optical information carried by the record medium 16 being scanned. The scanning means generates a representation of the optical information carried by the record medium. For example, the scanning means may generate a plurality of parallel scan lines of pixel data wherein each scan line is the image of one line of black and white or gray scale data across on the record medium. Scan line 20 is typical of the plurality of scan lines.

In this example, the record medium is a flat sheet of paper. Although various examples of carrying out the invention refer to the use of "paper," it should be understood that the invention is not limited to the use of paper as a record medium. A sheet of paper carrying optical information is also referred to herein as a "document."

The input device 14 also includes detector means, which may include one or more paper sensors such as sensors 22, for sensing the presence of the document to be scanned. In this example, the sensors sense the paper's insertion into or placement on the input device. In response to sensors 22, the detector means generates a signal which triggers the scanning means in the input device to start the scanning process. Document 16 is drawn into the input device by means (not shown) for automatically drawing in the paper. Such mechanisms are well known. The document 16 passes under a linear imaging array (not shown) such as a contact image sensor ("CIS") array or, alternatively, a charge coupled device ("CCD") array which generates scan lines of data. Such image sensing arrays are also well known. The particular implementation of the scanning means and image sensing array is not critical to the invention.

Figure 2 shows an alternative embodiment of the scanning input device according to the present invention. Figure 2 is a partially exploded view of a scanning input device 24, which may be mountable on a computer monitor 26 by means of clips 28 and 30 which snap into slots 32 and 34, respectively, formed in the housing of the monitor 26. Alternatively, the input device may be mounted by means other than clips and slots or may be mounted on other devices, such as on a keyboard, a printer or a computer housing. As a further alternative, the input device may be integral with another device, such as a computer monitor or computer housing. Such arrangements reduce the footprint of the input device essentially to zero. As a further alternative, by omitting clips 28 and 30, for example, the input device may be free-standing and not mounted on or fixed to another device. The input device has a housing 36 containing the detector means (not shown) and scanning means (not shown), in a manner similar to the embodiment of Figure 1. A slot 38 is provided for inserting a paper sheet. The paper is automatically drawn into the housing 36 for scanning, is fed through the housing and is exited onto a paper catch tray 40, which may be omitted. Input device 24 may also be coupled via data transfer means to a host computer in the manner of Figure 1.

The input device 12 of Figure 1 and the input device 24 of Figure 2 also include output means (not shown) for generating an output signal in response to the representation of optical information generated by the scanning means. The output means includes means for formatting the output signal in a data protocol format for use for data transfer with the host computer. The formatted output signal may include a code indicating a detection of the paper presence by the detector means. In one embodiment, the code is received by processing means, including software resident in the host 10, which triggers the host computer to read the port to which cable 12 is coupled to receive data from the input device. The detection code may be an interrupt which vectors processing by the host to a service routine which then reads the incoming serial data from the input device and stores it in a file.

Alternatively, the processing means, including software, may be physically located in the same housing as the scanning means, detector means and output means rather than in a separate enclosure or device such as a host computer. Thus, although various embodiments are described in which a host computer is employed, the teachings of those embodiments are generally applicable to arrangements in which a stand-alone device may include all of the elements of invention. When the input device 14 is used with a host computer, processing means in the host computer may include input device software facilitating the host computer's operation with the input device (hereafter the "ID host software"). The input device, which includes the detector means, scanning means and the output means, includes its own resident input device software which operates in cooperation with the ID host software. When the input device is part of a stand-alone device which includes processing means, the ID software need not be separated.

In one embodiment, the software of the input device resident on the host also generates a menu presenting options to the user regarding what may be done with the optical information or scanned image. In the case of a stand-alone device, the ID software may also generate such a menu and provide the selection functions described below. The details of the pop-up window or menu are not critical to the invention. The input device software resident in the host may automatically generate the menu options by checking the bulk storage memory device (typically a hard disk) and the random access memory to determine what software and processes are resident and then generate a menu option for each capability of the host as represented by this software. The user may then select a menu option by, for example, pointing and clicking with a mouse or typing a highlighted letter in the menu option on the computer keyboard.

Figure 3 shows a menu 42 that may be presented to the user. The user may then make a manual selection of what to do with the scanned image. The menu options may include, for example, "store," "spreadsheet," "word process," "draw," "send," "fax," "OCR," and "cancel." In practice, there may be fewer or more options and the options may differ from those shown in this example.

In other embodiments, instead of the user providing input instructions in response to a menu, the instructions or commands may, for example, originate in the scanned representation of optical information. In one embodiment, in which a host computer is used, processing means, including means for recognizing one or more commands, which in turn includes input device software resident on the host, analyzes the output signal from the input device to find one or more commands therein which tells the ID host software what is to be done with the incoming data. Alternatively, commands may be generated in the input device - they may be predetermined or selected by a user prior to commencement of the scanning process.

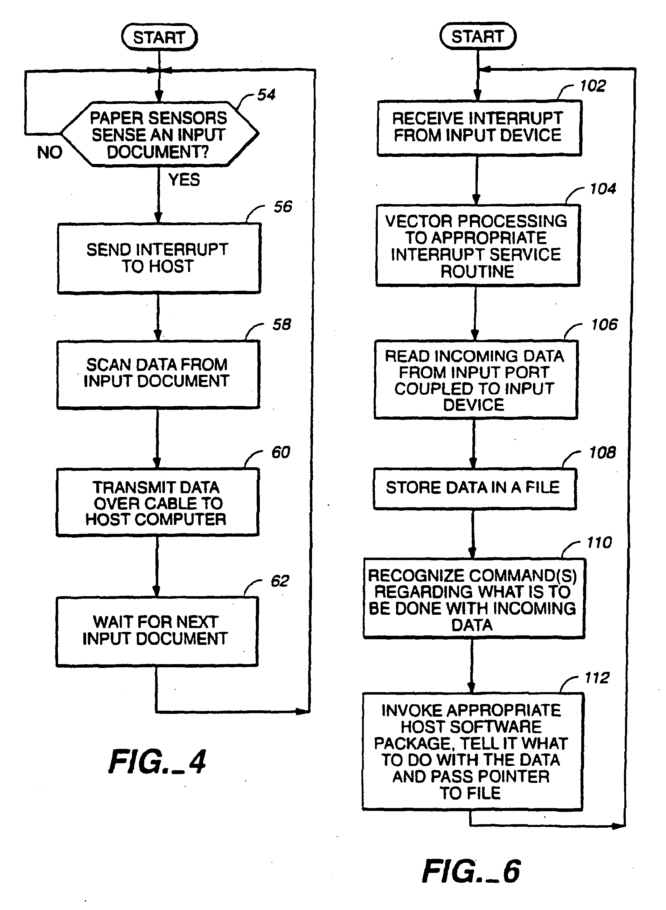

After the determination is made regarding what is to be done with the incoming data, the processing means, including ID host software or other suitable software, then passes a command or commands and a pointer to the appropriate software or process resident on the host to invoke the appropriate software, telling it what to do and telling it where the file is which contains the data just received from the input device. Alternatively, the file may be directly passed to the software or process rather than passing a pointer. Preferably, all of these actions result automatically without any act by the user other than placing the paper in the scanning input device. This process is symbolized by the flow chart of Figure 4 which represent processing by the input device and the ID host software, respectively.

Referring to Figure 4, block 54 represents the process of sensing the insertion of the paper to be scanned. The paper sensors may use, for example. microswitches, proximity sensors, or light beams which are interrupted by the presence of the paper. Light beams or other all-electronic sensors may be used for reliability greater than a mechanical microswitch. The details of implementation of the paper sensors is not critical to the invention.

Block 56 represents the process of sending an interrupt to the host computer 10 to inform it that a document to be scanned has been inserted and that scanned data will be arriving shortly. In alternative embodiments. the input device software resident on the host may poll the input device periodically to determine if a paper has been input for scanning. If it has, the acknowledgment message from the input device will serve to cause the ID host software to perform the processing described above.

Block 58 represents the process of scanning the data from the document, including the process of scanning the document for one or more symbols which, if present, may indicate what the host is to do with the scanned image data. In one embodiment, the process derives gray scale data from the images on the document. Although something other than 256 levels could be used, in one embodiment, 256 gray scale levels are used and an 8-bit byte is generated for each pixel on each scan line. In one embodiment, the gray scale data is not permanently stored in a file for later reprocessing such as when the discrimination threshold changes. but in alternative embodiments. the gray scale data may be stored in a file in random access memory ("RAM") or on a bulk storage device such as a hard disk, an optical disk, a recordable compact disk, a streaming tape, etc.

In one embodiment, scanning means in the input device may include symbol recognition software that recognizes symbols on the document to be scanned, which symbols may indicate whether the document is to be FAXed, sent as E-mail, etc. The particular recognition software employed is not critical to the invention. Symbol recognition software and processes are well known. The symbols may be either preprinted on the document, drawn on the document by hand by the user, or carried by a sticker or label placed on the document by a user. Symbols may be printed on the document using software that has predefined graphic images for every type command which the input device may execute and which may print these symbols on the document to be scanned by running the document through a printer, etc. Automatic processing of the scanned image may be started by the recognition of the symbol by the scanning means without the user having to press any buttons, make any menu selections, etc. Alternatively, symbol recognition may take place in the scanning means, which may be in a host computer.

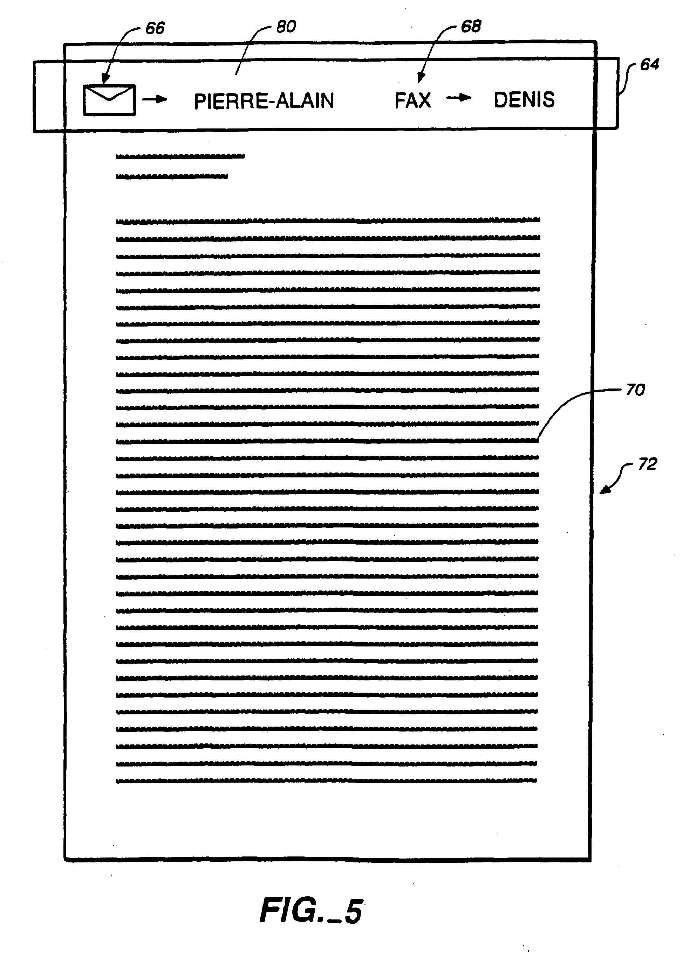

Figure 5 represents one way of using this input device technology where the symbols may be placed in a predetermined "hot zone" 64. The hot zone may be some predetermined portion at the top edge of the paper to be scanned, but in other embodiments it may be any predetermined portion of the paper. Use of a hot zone reduces the processing requirements of the recognition software because it need not search the entire document. In Figure 5, an E-mail symbol 66 and a FAX symbol 68 are present in the hot zone. The block 58 in Figure 4 represents, in addition to scanning the main body 70 of the document 72 in Figure 5, the process of scanning these symbols in the hot zone, recognizing them and translating these symbols into a command or set of commands that will be used by the processing means including the ID host software to invoke the proper software or process.

In some embodiments the command symbols may be stickers that are affixed to the document by a user. The use of stickers to carry symbols has certain advantages, including, for example: convenience in use; the symbol recognition software may be pre-trained to recognize specific symbols carried by the sticker. The stickers may be removable so as not to permanently deface the document.

In other embodiments, command symbols may be printed in the hot zone, as by a preprinted form or by printing done by the user on a printer or even a rubber stamp.

Alternatively, instead of using preprinted forms or affixable stickers, the command symbol may be hand drawn in the hot zone. In this case, the recognition software in the input device may have to be trained to recognize the hand drawn symbols.

Auxiliary or attribute symbols may be included in proximity to command symbols to more precisely control the processing commanded by the command symbol. For example, in Figure 5, the E-mail symbol 66 causes the input device recognition means to recognize the fact that the scanned image is to be sent as an E-mail image and issue a command or set of commands to invoke the E-mail software in the host. The auxiliary or attribute symbol in this case is shown at 80 and is a person's name "Pierre-Alain." The auxiliary symbol is also analyzed by the recognition software. It may, for example, compare it to a list of previously stored symbols representing the names of all the people to whom the user may wish to send a FAX. The symbol need not be alphanumeric. For example, it may be a geometric shape such as a multisided figure: a hexagon, for example.

The use of auxiliary or attribute symbols is not mandatory. The presence of a command symbol and the absence of an auxiliary symbol may, for example, result in a prompt asking the user to supply needed auxiliary information or may result in the generation of default auxiliary commands. For example, there may be a default telephone number for FAX transmissions or the storage of an image as a file in a default directory.

In some embodiments, the sticker itself (or the preprinted command) may have a secondary "hot zone" which the recognition software associates with the command appearance and in which the recognition software will look for attributes such as FAX phone numbers, etc. The secondary hot zone may be within the sticker itself or in proximity thereto at a location with respect to the command symbol expected by the recognition software.

In some embodiments, a single sticker may be used for all commands to the input device software with specific "command boxes" within the perimeter of the sticker which the user may blacken out with a pencil or pen to indicate which particular command of the overall set of input device commands is desired by the user. Such an arrangement may also be employed in the case of preprinting.

In other embodiments, there may be an individual sticker which is unique for each command. The stickers in this set which need supplementary symbols such as a name from a FAX directory or a FAX phone number may have letter and/or number boxes within the perimeter of the sticker, including, for example, sets of letters of the alphabet and/or sets of numbers from 0 to 9 so that a name or shortened form of a name may be indicated by marking a letter in each alphabet set and a phone number may be indicated by marking each a number in each number set. Alternatively, the sticker may have two hot zones - one of which allows selection of the particular command to be invoked by marking the command. In each instance of "marking" a command, letter or number, the marking may be done in any predetermined way which is recognizable by the recognition software. For example, there may be a defined area adjacent the command, letter or number which is darkened by the user by means of a writing instrument. These alternatives may also be implemented in the case of preprinting.

The input processing just described requires that the user know only the name of the person to whom a FAX or E-mail message is to be sent. The user need not know how to invoke the appropriate software or process and run it.

Returning to the consideration of Figure 4, box 60 represents the process of transmitting the scanned image data from the document inserted by the user. In an embodiment described in more detail below, the scanned image data is compressed by the scanner means. In one embodiment, this is accomplished in the input device software on the scanner side of the RS232 serial data cable before being transmitted to the host computer 10 and this process is included within the process of transmitting the data represented by box 60. Any known data compression process may be used for the pretransmission compression process, and the details of how it is done are not critical to the invention. For example, known FAX machine Group III or Group IV compression algorithms may be used.

The input device software then waits for the next document to be inserted as represented by box 62 and upon such input the loop returns to its start input.

Referring to Figure 6, there is shown a flow chart for the processing performed by input device software resident on the host. In the embodiment represented by Figure 4, an interrupt driven scheme is used. Box 102 represents the process of receiving the interrupt from the scanning input device 14 in Figure 1 resulting from the paper sensors sensing the presence of a document to be scanned. The interrupt may, for example, cause the host computer 10 to stop whatever it is doing and vector the host computer processing to an interrupt service routine assigned to the interrupt number assigned to input device 14 as symbolized by box 104. The data scanned from the document is then received from the RS232 cable and, if the input to the RS232 cable has been data compressed, the incoming data is decompressed by the input device software resident on the host computer, for example, and is stored in a file as symbolized by box 106. The compression and decompression process may be omitted at the cost of longer transmission times. Box 108 represents the process of storing the received data in a file on a hard disk, RAM, etc.

Box 110 represents the process of recognizing commands as to what is to be done with the incoming data. In one embodiment, the commands regarding what is to be done with the data arriving from the input device are manually entered by the user by selections from a menu of options which automatically appears whenever the interrupt from the input device occurs. In one embodiment, the menu of options appears automatically, for example, as a pop-up window as symbolized by box 111 in Figure 1 and by Figure 3. An image of the incoming data is also displayed in a pop-up window.

In alternative embodiments, the process of box 110 represents the process of recognizing commands in the data stream by symbol recognition means, which may be a part of the processing means in the host computer or it may be a part of the scanning means, and is part of the process of scanning the image on the document 16 represented by box 58 of Figure 4. As described above, the symbol recognition process recognizes, in one of the ways described above or some equivalent way, a particular symbol on the document which has been selected by the user as representing the desired processing of the data scanned in by the input device. The symbol selection is by one of the ways described above or some equivalent manner.

After the selected symbol is recognized in the process of box 58 of Figure 4, a translation to the appropriate command is made by the input device software resident on the scanner 14 and the command is sent over cable 12 to the host. The input device software resident on the host then receives and recognizes these commands and issues the appropriate commands to the software on the host capable of doing the function indicated by the commands received from the input device symbol recognition software as symbolized by box 112. The ID host software may also transmit, if they are present, appropriate auxiliary or attribute data to the selected host software such as the FAX phone number or E-mail address to allow the selected host software to complete processing the data. This process is also symbolized by box 112. The auxiliary or attribute data may be generated by any of the symbol recognition processes described above carried out by the input device software resident on the scanning mechanism, or it may be done by the input device software resident on the host in response to data entered manually by the user through the keyboard, and each of these alternative embodiments is intended to be symbolized by the process of box 112 in Figure 6.

Although the software or process invoked by the commands are usually resident on the host or some external bulk storage memory device, they could also be resident on a file server coupled to the host via a local area network. Alternative embodiments in which the invoked software or process is resident on a file server coupled to the host 10 by a network or other link is symbolized by the network pigtail 113 in Figure 1.

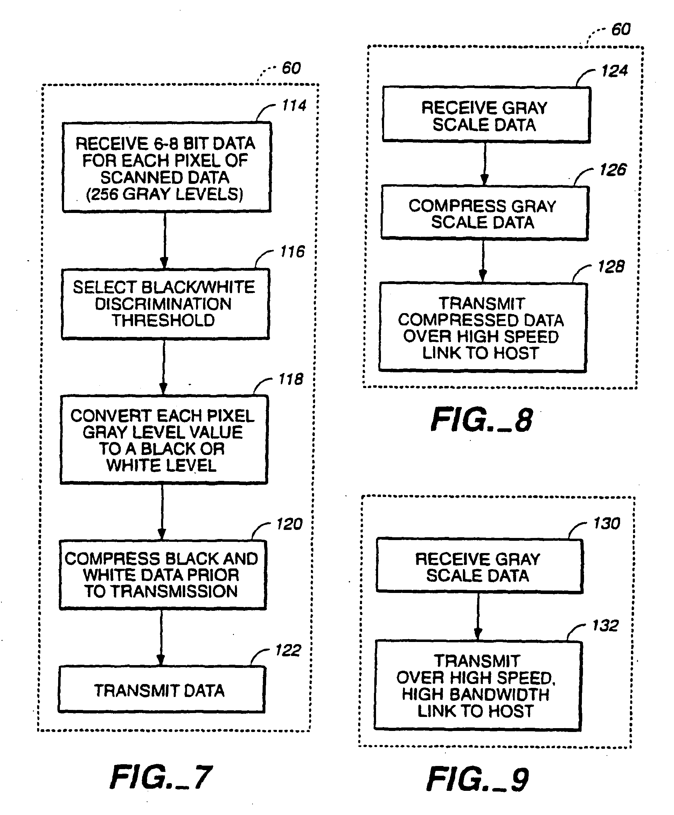

Referring to Figure 7, there is shown a flow chart of the process of compressing and transmitting data in an embodiment for transmitting in RS232 serial data protocol. The flow chart of Figure 7 is encircled by a dashed box labeled 60 to symbolize the fact that the process shown in Figure 7 is a more detailed description of one embodiment of the process symbolized by box 60 in Figure 4. The process symbolized by Figure 7 is only one example of an embodiment represented by box 60 in Figure 4. Box 60 also symbolizes other embodiments in which other transmission formats and protocols, including parallel transmission is used or in which no data compression is used.

Scanning mechanisms used in the scanning input device may be of the type which generate pixel data using 256 or more gray levels. This translates to eight bits per pixel. When using serial protocol transmission in which bandwidth is limited, it is preferred to transmit black and white data where each pixel's data is a single bit which is either a 1 or 0 representing black or white. This conversion from gray scale to black and white is followed by compression of the black and white data and serial transmission of the compressed data. The result is large savings in transmission time. Such compression techniques are known *per se.* The particular implementation of the compression scheme is not critical to the invention.

The first step in this process is symbolized by block 114 where the gray scale data is received from the process symbolized by box 58 in Figure 4. Next, a black/white discrimination threshold level is selected to be used in converting the gray scale data to black and white information as symbolized by block 116. If, for example, 256 gray levels are present, the discrimination threshold may be arbitrarily preset at 128 so that any gray level having a decimal value below 128 is set at binary 0 for black and any pixel having a gray level greater than 128 may be set at binary 1 for white.

The process of selecting the black/white discrimination threshold symbolized by block 116 may be done by any of a number of ways. One method is to select a predetermined threshold level such as 128 or some other level which has been experimentally determined to work best in most cases. In an alternative embodiment, the user may change the threshold for each document by changing a "preferences" attribute in a control panel or set-up menu for the input device software. A selectable default value such as the last value selected or some predetermined value may be used if the user fails to specify a preference.

As mentioned before, when the user puts the document in the scanner the input device software will automatically scan the document, send the data to the host in any of the ways described herein, and the input device software resident on the host will then cause a pop-up window to appear on the screen where the image of the scanned document appears. In another alternative embodiment, the user may then inspect the image to determine readability and, if the contrast or readability is not to the user's liking, the user may then change the discrimination threshold. In one version of this class of embodiments, the gray scale data will be stored in a memory associated with the input device 14 of Figure 1. The input device host resident software then receives the user's new preference for the discrimination threshold and sends it to the input device software resident on the scanner 14. The gray scale data is then reprocessed with the new discrimination threshold and new black and white data is generated and sent to the input device host resident software for redisplay. This process continues until the scanned image displayed on the host meets the user's needs.

Alternatively, the black/white discrimination threshold may be selected automatically based upon the scan results of a test pattern with various contrasting patterns printed on the input document.

After the threshold is selected by one of these methods. the gray scale data is converted to black and white data as symbolized by block 118. Blocks 120 and 122 in Figure 7 represent the process of compressing the black and white data and transmitting it on the data cable to the host computer, respectively.

In other embodiments, especially parallel protocol transmission embodiments or embodiments where bandwidth is not at such a premium, for example, where a fiber optic transmission medium is used between the input device and the host, the steps of selecting a discrimination threshold and converting the pixel data from gray scale to black and white may be omitted and the gray scale data may be transmitted directly to the host or the gray scale data may be compressed and then transmitted to the host for decompression and display. Figure 8 represents the transmission process of block 60 in Figure 4 where gray scale data is received from the linear imaging array (block 124), compressed using any known compression algorithm suitable for compressing gray scale data (block 126), and transmitted over a high speed link to the host (block 128).

Figure 9 represents the embodiments wherein the transmission process of box 60 in Figure 4 comprises the steps of receiving the gray scale data (block 130) and transmitting it directly over a high speed, high bandwidth link to the host as symbolized by block 132. In alternative embodiments, the uncompressed gray scale data or the compressed gray scale data may be transmitted to the host.

The scanner system of the present invention may operate wholly in the digital domain or in some combination of the digital and analog domains. Implementations in the digital domain may include, for example, hard-wired logic (using, for example, components and/or application specific integrated circuits or some combination of the two), software and/or firmware controlled microprocessors. software and/or firmware controlled digital signal processors or any combination of such building blocks.

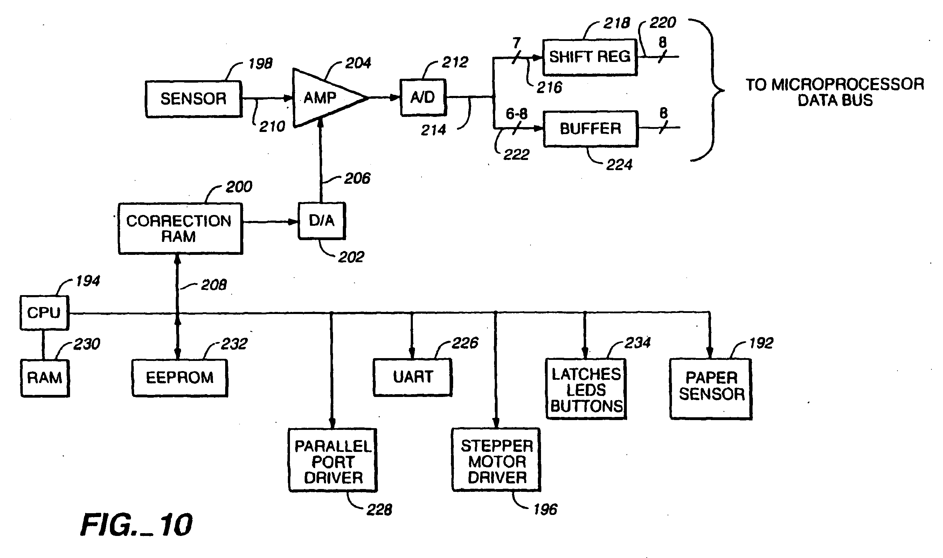

Referring to Figure 10, there is shown a block diagram of the electronics of the detector means, scanning means and output means resident in the scanning input device 14 of Figure 1. The presence of a document is sensed by a paper sensor 150 which may generate an interrupt to a microprocessor 194 or the paper sensor may be polled periodically by the microprocessor. The microprocessor, which may be a Zilog Z180, for example, then automatically starts the scanning processing by addressing, for example, a stepper motor driver 196, causing a stepper motor to drive means for drawing the document into the input device and moving it past a sensor array 198. The sensor array generates a plurality of scan lines of analog gray scale pixel data as the document moves past it.

Optionally, the gray scale data may be corrected to account for different sensitivities of the image cells in the contact image sensor. Various imaging cells of the sensor may have different sensitivities caused by manufacturing nonuniformities. Correction is done by the combination of a correction RAM 200, a digital-to-analog converter 202 and a differential amplifier 204. Each imaging cell, i.e., pixel position. has a corresponding memory location in the image sensor 198. In each memory location, a correction number is stored, a portion of which is dedicated to correcting the white level of the cell and another portion of which is dedicated to correcting the dark current. The correction numbers are converted to analog signal levels by the digital to analog converter and the resulting signals are applied via bus 206 to change the gain and reference voltages of the amplifier 204 to correct the white level and dark current level of the amplifier 204. The correction numbers are addressed sequentially via address bus 208 as the gray scale pixel value from each corresponding imaging cell is read out on bus 210 and coupled to an amplifying input of the amplifier 204.

The correction numbers stored in correction RAM 200 are also the mechanism by which changes in conversion threshold are made as described earlier to convert the gray scale data to black and white data. In other words, by moving both the white and dark current correction numbers simultaneously in the same direction, the midway point between the dark current and white current levels is also shifted in the same direction as the shift in the correction. This has the effect of changing the discrimination threshold value so that the decisions as to which gray scale pixel values are assigned to black and which are assigned to white. Of course, changes in the dark current and white level correction numbers may also be made in opposite directions to alter the dynamic range of the imaging cell. This may or may not change the discrimination threshold level depending upon the relative movement of the dark current and white level correction numbers.

After the correction the gray scale pixel data is applied to the input of an analog-to-digital converter 212 where the analog pixel data is converted to, preferably, 6-8 bit gray scale data. The most significant bit of this gray scale data is stripped off the bus 214 as a one bit signal on bus 216. The stream of bits on bus 216 are shifted into a serial-in-parallel-out shift register 218 until a full byte of data has accumulated. The data in shift register 218 is then output in parallel on the microprocessor data bus 220. The 6 to 8 bits of gray scale data on bus 214 are also loaded via bus 222 into a buffer 224. The single bit data on bus 216 is essentially the black and white data converted from the gray scale data assuming that the conversion threshold is midway between the dark current level and the white level since the most significant bit is used. This black and white data may then be collected by the microprocessor 194 and sent directly to the host via a Universal Asynchronous Receiver Transmitter ("UART") 226 and a serial cable (not shown) connected to the host or the black and white data may be compressed. As is well know, a UART interfaces serial to parallel data streams and vice-versa. The black and white data. in one embodiment, is sent to a conventional compression process for run length encoding, etc. The compression process is carried out by microprocessor 194 on the black and white data.

Alternatively, the gray scale data stored in buffer 224 may be read by the microprocessor 224, compressed and then transmitted to the host via the UART 226. Alternatively, the gray scale data may be collected from the buffer 224 and sent directly to the host without compression via the serial link and UART 226 or a high speed, parallel cable (not shown) coupled to parallel port driver 228.

The microprocessor 194 executes the compression algorithm and all the other instructions necessary for the processing described herein from RAM 230 which is loaded with the program from the input device software resident on the host computer at boot time through the parallel port driver 228. EEPROM 232 stores a small amount of boot code which gets the microprocessor up and running at boot time and causes it to request downloading of its program from the host.

Box 234 represents a series of latches, LEDS and front panel buttons. The button may cause an interrupt to indicate when it is pushed or it may be periodically polled. Box 234 also represents the driver for the LED which may be turned on by the microprocessor 194 by setting a bit in one of the latches. Other bits in the latches may be set according to whatever configuration the input device is programmed to assume and whatever is the current status such "send gray scale data," "send compressed gray scale data over the parallel port," "send compressed black and white data over the serial port," "a paper has been inserted for scanning," etc.

Although the invention has been disclosed in terms of the example embodiments disclosed herein, those skilled in the art will appreciate other modifications and improvements which may be made without departing from the scope of the invention. All such modifications and improvements are intended to be included within the scope of the claims appended hereto.

## Claims

1. A system comprising a scanning input device (14), a computer (10), and means (12) for connecting the input device (14) to the computer (10) and to establish a communication between them, wherein said scanning input device (14) comprises
detector means (22) for detecting the placement of a document (16) by a user,
scanning means for generating image data representing the image of the document, and
means, responsive to the detector means (22), for drawing the document into scanning relationship with said scanning means so that said scanning means generates said image data, wherein said placement alone is sufficient to initiate said drawing,
and
said computer comprises means for displaying (26), automatically and immediately in response to said placement and receipt of said image data, a visual representation of said image data, wherein said computer (10) comprises means for displaying (26), in response to said placement, a plurality of user-selectable options for processing said image data.

2. A system according to claim 1 wherein said input device (14) is adapted to send an interrupt to said computer (10) when a document (16) is placed by a user and said computer (10) is adapted to display said visual representation in response to receiving said interrupt and said image data.

3. A system according to claims 2 and 3 wherein said computer is adapted to display said plurality of user-selectable options in response to receiving said interrupt.

4. A system according to claim 1 wherein said computer is adapted to periodically poll said input device (14) to determine whether a document (16) has been placed by a user, said input device (14) is adapted to send an acknowledgement to said computer in response to polling when a document is placed by a user, and said computer (10) is adapted to display said visual representation in response to receiving said acknowledgement and said image data.

5. A system according to claims 4 wherein said computer (10) is adapted to display said plurality of user-selectable options in response to receiving said acknowledgement.

6. A system according to any one of claims 1, 3 or 5 wherein said computer (10) further comprises means for establishing which option has been selected by the user and for invoking a process corresponding to the option selected by the user for processing said image data.

## Patentansprüche

1. System umfassend eine scannende Eingabeeinrichtung (14), einen Computer (10), und Mittel (12) zum Verbinden der Eingabeeinrichtung (14) mit dem Computer zur Herstellung einer Kommunikation zwischen ihnen, wobei die Eingabeeinrichtung umfaßt Detektormittel (22) zum Erfassen des Einlegens eines Dokuments (16) durch einen Benutzer, Scanmittel zur Erzeugung von Bilddaten, die das Bild des Dokuments repräsentieren, und auf die Detektormittel ansprechende Mittel zum Ziehen des Dokuments in eine Scanbeziehung mit den Scanmitteln derart, daß die Scanmittel die Bilddaten erzeugen, wobei das Einlegen allein zum Einleiten des Ziehens ausreicht, und der Computer Mittel (26) zum automatischen und sofortigen Darstellen als Reaktion auf das Einlegen und den Empfang der Bilddaten einer visuellen Darstellung der Bilddaten aufweist, wobei der Computer (10) Mittel (26) zur Anzeige umfaßt, und zwar als Antwort auf das Einlegen einer Mehrzahl benutzerwählbarer Optionen zur Verarbeitung der Bilddaten.

2. System nach Anspruch 1, bei dem die Eingabeeinrichtung (14) in der Lage ist, an den Computer (10) einen Interrupt zu senden, wenn ein Dokument (16) durch einen Benutzer eingelegt wird, und der Computer (10) in der Lage ist, die visuelle Darstellung als Antwort auf den Empfang des Interrupts und der Bilddaten anzuzeigen.

3. System nach Anspruch 1, bei dem der Computer in der Lage ist, die Mehrzahl benutzer- wählbarer Optionen als Antwort auf den Empfang des Interrupts anzuzeigen.

4. System nach Anspruch 1, bei dem der Computer in der Lage ist, periodisch die Eingabeeinrichtung (14) abzufragen, um festzustellen, ob ein Dokument (16) durch einen Benutzer eingelegt wurde, wobei die Eingabeeinrichtung (14) in der Lage ist, an den Computer als Antwort auf die Anfrage eine Bestätigung zu senden, wenn ein Dokument durch einen Benutzer eingelegt wurde, und der Computer (10) in der Lage ist, die visuelle Darstellung als Antwort auf den Empfang der Bestätigung und der Bilddaten anzuzeigen.

5. System nach Anspruch 4, bei dem der Computer (10) in der Lage ist, die Mehrzahl benutzer- wählbarer Optionen als Antwort auf den Empfang der Bestätigung anzuzeigen.

6. System nach einem der Ansprüche 1, 3 oder 5, bei dem der Computer (10) ferner Mittel zur Feststellung aufweist, welche Option von dem Benutzer gewählt wurde sowie zum Aufruf eines Prozesses zur Verarbeitung der Bilddaten, welcher der von dem Benutzer gewählten Option entspricht.

## Revendications

1. Système comprenant un dispositif d'entrée à balayage (14), un ordinateur (10), et un moyen (12) pour connecter le dispositif d'entrée (14) à l'ordinateur (10) et pour établir une communication entre eux, dans lequel ledit dispositif d'entrée à balayage (14) comprend
un moyen de détection (22) pour détecter la mise en place d'un document (16) par un utilisateur,
un moyen de balayage pour produire des données d'images représentant l'image du document, et
un moyen, sensible au moyen de détection, (22), pour entraîner le document en une relation de balayage avec ledit moyen de balayage afin que ledit moyen de balayage produise lesdites données d'images, dans lequel ladite mise en place seule suffit pour déclencher ledit entraînement, et
ledit ordinateur comprend un moyen pour afficher (22) automatiquement et immédiatement en réponse à ladite mise en place et à la réception desdites données d'images, une représentation visuelle desdites données d'images, et ledit ordinateur (10) comprend un moyen pour afficher (26), en réponse à ladite mise en place, une pluralité d'options sélectionnables par l'utilisateur pour le traitement desdites données d'images.

2. Système selon la revendication 1, dans lequel ledit dispositif d'entrée (14) est adapté pour envoyer une interruption audit ordinateur (10) lorsqu'un document (16) est placé par un utilisateur et ledit ordinateur (10) est adapté pour afficher ladite représentation visuelle en réponse à la réception de ladite interruption et desdites données d'images.

3. Système selon les revendications 2 et 3, dans lequel ledit ordinateur est adapté pour afficher ladite pluralité d'options sélectionnables par l'utilisateur en réponse à la réception de ladite interruption.

4. Système selon la revendication 1, dans lequel ledit ordinateur est adapté pour interroger périodiquement ledit dispositif d'entrée (14) pour déterminer si un document (16) a été placé par un utilisateur, ledit dispositif d'entrée (14) est adapté pour envoyer un accusé de réception audit ordinateur en réponse à l'interrogation lorsqu'un document est placé par l'utilisateur, et ledit ordinateur (10) est adapté pour afficher ladite représentation visuelle en réponse à la réception dudit accusé de réception et desdites données d'images.

5. Système selon la revendication 4, dans lequel ledit ordinateur (10) est adapté pour afficher ladite pluralité d'options sélectionnables par l'utilisateur en réponse à la réception dudit accusé de réception.

6. Système selon l'une quelconque des revendications 1, 3 ou 5, dans lequel ledit ordinateur (10) comprend en outre un moyen pour déterminer l'option qui a été sélectionnée par l'utilisateur et pour appeler un processus correspondant à l'option sélectionnée par l'utilisateur pour le traitement desdites données d'images.
